# EUROPEAN PATENT SPECIFICATION

(11) **EP 3 062 009 B1**
(45) Date of publication and mention of the grant of the patent: **09.01.2019**
(21) Application number: 16156785.4
(22) Date of filing: 22.02.2016
(51) Int. Cl.: F16L 47/16, F16L 15/00

(54) **PLASTIC TUBE AND PLASTIC TUBE JOINT**
KUNSTSTOFFROHR UND KUNSTSTOFFROHRVERBINDUNG
TUBE EN PLASTIQUE ET JOINT DE TUBE EN PLASTIQUE

(30) Priority: 24.02.2015 IT BO20150095
(43) Date of publication of application: 31.08.2016
(73) Proprietor: IPM S.R.L., 48022 Lugo (Ravenna) (IT)
(72) Inventor: ARGNANI, Claudio, 48010 Fusignano (RA) (IT)
(74) Representative: Cicconetti, Andrea

(56) References cited:
- DE-A1- 4 239 092
- US-A- 4 537 426
- US-A1- 2014 070 526

## Description

The invention relates to junctions and couplings for plastics pipes and, in particular, refers to a joint carried out on ends of pipes made of polyolefin plastic material for allowing the sealed junction thereof and the construction of conduits or piping for pressurized fluids, in particular for supplying drinking water.

In the field of plastic material pipe for supplying pressurized fluids, typically drinking water, the connection between two subsequent pipes is generally carried out by welding the head ends of the pipes, so as to carry out a conduit, which is substantially integral or in a single body, which ensures the seal even at high operating pressures.

The process for joining pipes is, however, rather laborious and complex and has to be carried out on field, i.e. at the piping-laying site. Therefore, it is required, in addition to skilled labour, the availability of machinery and equipment needed for machining and preparing the pipe ends (smoothing, facing) and then welding the latter ones, typically by head-to-head fusion, electrofusion, etc.

This kind of junction is therefore rather expensive. Furthermore, in the welding process, protuberances, protrusions, projections arise inside the pipe, at the joining area between two pipes, that may interfere with the water flow and form stagnation points, interstices, slits in which dirt, extraneous objects, impurities that are present in the water may accumulate.

Plastics pipes are also used that are connected each other for forming piping or conduits by bell joints.

Bell joint is known as the so-called "female" end portion of the pipe that has an enlargement of the cross section (external and inner diameters) such as to form a sort of enlarged tubular sleeve that is suitable to receive and be coupled with the so-called "male" end, normal and not enlarged, of the subsequent pipe. Inside the joint an annular recess is made that is intended for housing a gasket that ensures the wet seal once the connection between the two pipes of the piping is carried out. The male end is inserted with interference into the female end so as to carry out a stable coupling.

This kind of connection does not require particular and complex on field junction processes, however, is not suitable in the case of piping for highly pressurized fluids. Moreover, in the case of drinking water, the elastomeric material of the gasket has to be appropriate and suitable. The usable materials are expensive, deteriorate and weaken in time, requiring maintenance interventions for replacement.

US 4537426 discloses a non-ferrous pipe coupling that comprises tubular threaded male and female coupling elements attached to ends of respective pipe sections. The male element terminates in a cylindrical non-threaded, non-tapering sealing surface adjacent its threads and the female coupling element, which may be filament-wound, includes an internal sealing sleeve or liner with a web that provides a lip seal around the cylindrical sealing surface of the male element. The web is urged into sealing engagement with the cylindrical surface by fluid pressure within the coupling. The liner precludes egress of fluid from within the coupling through the female coupling element.----------------------------------

An object of the present invention is to improve the known joints and couplings for seal joining plastic pipes so as to form piping or conduits for highly pressurized fluids, in particular drinking water.

Another object is to provide a plastics pipe joint that allows joining two pipes in a simple and quick manner so as to carry out a tight and strong junction suitable to ensure a complete wet seal.

A further object is to provide a plastic pipe joint that does not require laborious and complex procedures for executing the junction at the piping-laying site, in particular a joint that does not require skilled labour and specific and expensive machinery and equipment. These objects and others are achieved by a plastics pipe joint according to one or more of the following claims.

The plastics pipe joint of the invention comprises a first tubular element provided with a first male end having an external wall provided with an external thread and a second tubular element provided with a second female end having an inner wall provided with an internal thread and an internal shoulder. The first male end is insertable and screwable into the second female end along a longitudinal axis in an assembled configuration for joining the first tubular element and the second tubular element so as to form the joint.

The inner wall of the second female end is provided with at least one flexible and/or deformable sealing portion, which is interposed between the internal shoulder and the internal thread; the external wall of the first male end comprises an abutment portion that is interposed between a front edge of the first male end and the external thread. In the assembled configuration, the sealing portion abuts, being deformed, the abutment portion so as to carry out with the latter a sealing portion for the wet seal of the joint.

In particular, the sealing portion comprises a sealing lip having an annular shape, which extends inside the second female end, in particular almost radially towards the longitudinal axis X. The sealing lip is tooth or hook shaped in a section according to a diametral plane passing through the longitudinal axis. The sealing lip is integral with the second tubular element, directly made on the inner wall, for example by chip machining or by thermoforming process. Since the second tubular element is made of plastics, the sealing lip, also by virtue of the particular geometry and shape thereof, can bend and deform when is abutted by the first male end so as to adhere to the abutment portion and form the sealing portion. The external and internal threads carried out with one or more thread starts also contribute to ensure the wet seal of the joint in the assembled condition.

Therefore, the plastic pipe joint of the invention allows joining in a quick, simple and, at the same time, tight and strong way, pipes made of plastic material, in particular polyolefin plastic, so as to form wet sealed piping or conduits, in which fluids can flow even under high pressure.

The threaded coupling between the two end portions allows obtaining a complete and tight junction with a simple relative rotation of the two pipes respect to one another around the longitudinal axis. In case the external and internal threads include two or more thread starts a minimal relative rotation of said elements is required, this allowing to further simplify and speed up the joint assembly, i.e. the junction of the two tubular elements.

Therefore, the plastics pipe joint of the invention does not requires laborious and complex assembly processes on the piping-laying site or skilled labour and specific and expensive machinery and equipment.

The invention will be better understood and implemented with reference to the attached drawings, which illustrate an exemplifying and not limiting embodiments thereof, in which:
- figure 1 is a perspective view of the plastic pipe joint of the invention in a disassembled configuration comprising a first tubular element and a second tubular element, partially sectioned;
- figure 2 is a front view of the joint of figure 1 in the disassembled configuration with the second tubular element in section;
- figure 3 is an enlarged and partial view of a second female end of the second tubular element of the joint of figure 1;
- figure 4 is an enlarged section of the joint of figure 1 in an assembled configuration;
- figure 5 is an enlarged view of the section of figure 4 that shows a sealing portion of the joint.

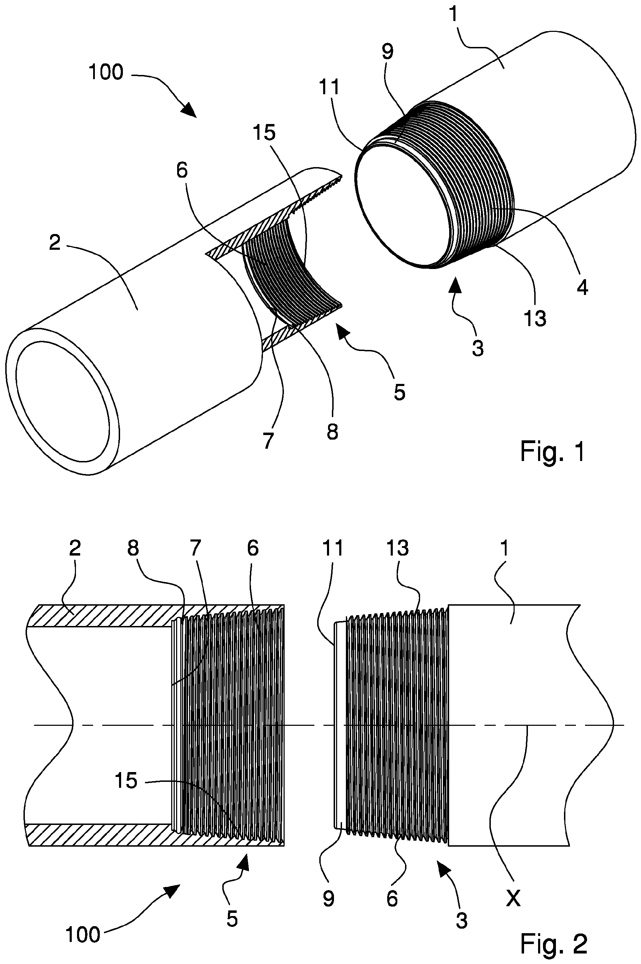

With reference to figures 1 to 5, the joint 100 of the invention for pipes made of plastic material, in particular polyolefin plastic, is illustrated which comprises a first tubular element or pipe 1, provided with a first male end 3 having an external thread 4, and a second tubular element or pipe 2, provided with a second female end 5 having an internal thread 6 and an internal shoulder 7.

The first tubular element 1 and the second tubular element 2 extend along a longitudinal axis X and have cylindrical walls with a substantially constant thickness.

The first male end 3 has an external wall 13 on which the external thread 4 is carried out, while the second female end 5 comprises an inner wall 15 on which the internal thread 6 and the internal shoulder 7 are carried out.

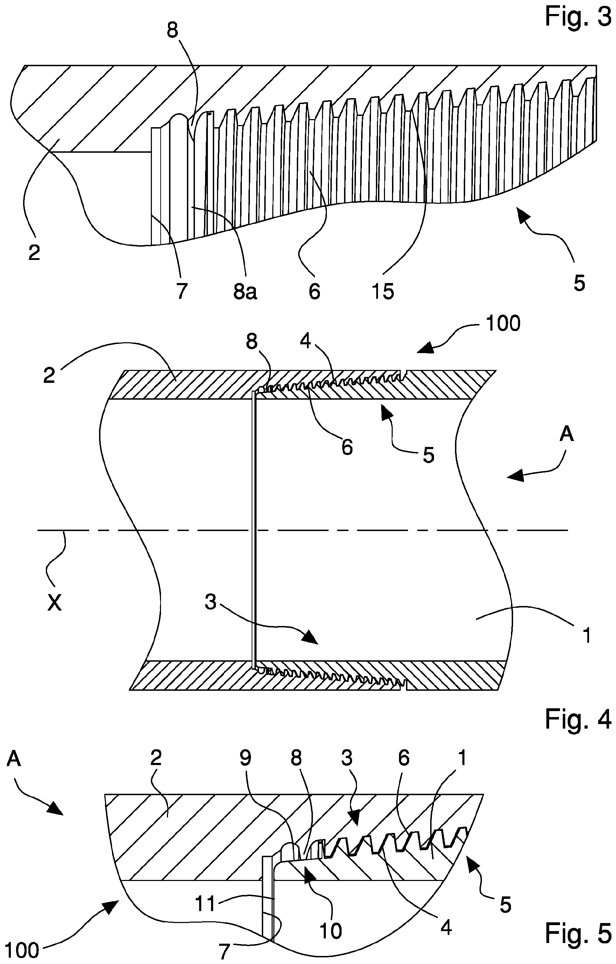

The first male end 3 is screwable into the second female end 5 in an assembled configuration A (figure 4) for joining the first tubular element 1 and the second tubular element 2 and thus forming the joint 100.

The inner wall 15 of the second female end 5 is provided with at least one flexible and/or deformable sealing portion 8, which is interposed between the internal shoulder 7 and the internal thread 6; the external wall 13 of the first male end 3 comprises an abutment portion 9 that is interposed between a front edge 11 and the external thread 4 of the first male end 3.

In the assembled configuration A, when the first male end 3 is inserted and screwed in the female portion 5, the sealing portion 8 abuts, being deformed, the abutment portion 9 so carrying out with the latter a sealing portion 10 that ensures the wet seal of the joint 100. The sealing portion comprises at least one sealing lip 8 having an annular shape, which extends inside the second female end, in particular almost radially towards the longitudinal axis X. The sealing lip is tooth or hook shaped in a section according to a diametrical plane passing through the longitudinal axis X, so as to be flexible and/or deformable in the axial and radial directions, i.e. parallel and orthogonally to the longitudinal axis X. The sealing lip 8 forms a central through opening 8a inside which the first male end 3 with the abutment portion 9 is inserted with interference. The abutment portion 9 substantially comprises an annular portion of the external wall 13.

The sealing lip 8 is integral with the second tubular element 2, is directly carried out on the inner wall 15, for example obtained by chip machining, while manufacturing the internal thread 6, or by thermoforming process. It should be noted that, since the second tubular element 2 is made of plastics, the sealing lip 8, also in virtue of its specific geometry and shape, can bend and deform when is abutted by the first male end 3 so as to adhere to the abutment portion 9 and form the sealing portion 10.

In the illustrated embodiment of the joint 1, the first male end 3 has a tapered shape, in particular has a truncated cone shape, and the external thread 4 and internal thread 6 are conical threads. More precisely, the external wall 13 of the first male end 3 has a truncated cone shape, converging towards the front edge 11, while the inner wall 15 of the second female end 5 has also a truncated cone shape that converges inwards, i.e. towards the internal shoulder 7. This configuration allows inserting more easily the first male end 3 into the second female end 5.

In a variant of the joint 100 that is not illustrated, the external wall 13 of the first male end 3 and the inner wall 15 of the second female 5 end are cylindrical.

The external thread 4 and internal thread 6 can include one or more thread starts, i.e. each one formed by one or more parallel helical ridge.

In a preferred embodiment, the external thread 4 and the internal thread 6 comprise two or more thread starts for enabling to screw in a complete and tight manner the first tubular element 1 to the second tubular element 2 with a minimum relative rotation of said elements around the longitudinal axis X. In this way, it is possible to simplify and speed up the assembly of the joint 100, i.e. the junction of the two tubular elements 1, 2.

The external thread 4 and the internal thread 6 can include metric threads or Gas threads, of cylindrical or conical type, according to the shape of the end portions, truncated cone or cylindrical.

In use, the joint 100 is carried out by aligning the two tubular members 1, 2 along the longitudinal axis X, and then inserting the first male end 3 into the second female end 4, imparting at the same time a relative rotation around the longitudinal axis X between the two tubular elements 1, 2 so that the external thread 4 and the internal thread 6 are progressively engaged until the first male end 3 is completely inserted into the second female end 4 in the assembled configuration A.

During the insertion of the first male end 3, at first the peripheral edge 11 and then the abutment portion 9 are inserted with interference inside the sealing lip 8 in the central opening 8a that is defined by the latter, causing the progressive deformation of the sealing lip. More precisely, also in virtue of the truncated cone shape of the first male end 3, the sealing lip 8 is bent towards the inside of the second female end 5 so as to adhere, by resilient and/or plastic deformation, to the abutment portion 9 at an annular area thereof. The sealing lip 8, due to its deformation, exerts also a circumferential compressing force that is radially headed towards the longitudinal axis X. In this way, the sealing portion 10 is carried out that is formed by the bent and deformed sealing lip 8 and the underlying abutment portion 9 and ensures the wet seal of the joint 100 of the invention, i.e. prevents that a pressurized fluid, which is contained inside the tubular elements 1, 2, may come out through the threaded coupling.

The external thread 4 and the internal thread 6 also cooperate in forming the seal. The shape or section of threads and/or the number of thread starts can be selected so as to ensure the complete wet seal in the assembled condition A.

Therefore, the plastic pipe joint 100 of the invention enables to join in a quick, simple and, at the same time, tight and strong manner pipes made of plastic material, in particular polyolefin plastic, so as to form wet sealed piping or conduits, in which fluids can flow also under high pressure.

The threaded coupling between the two end portions 3, 5 of the tubular elements 1, 2 allows obtaining a complete and tight junction with a simple relative rotation of the two tubular elements 1, 2 with respect to one another around the longitudinal axis X. In case the external thread 4 and the internal thread 6 comprise two or more thread starts, a minimum relative rotation of the said tubular elements is required, this allowing to further simplify and speed up the assembly of the joint 100, i.e. the junction of the two tubular elements 1, 2.

The joint 100 for plastic pipes of the invention therefore does not require laborious and complex assembling procedures on the piping-laying site or skilled labour or specific and expensive machinery and equipment.

It should be noted that the joint 100 of the invention ensures an optimal wet seal not only thanks to the coupling of the external threads 4 and the internal thread 6 of the internal end portions 3, 5, but mostly thanks to the sealing lip 8, which is carried out inside the second female end 5 integral therewith and which elastically and/or plastically abuts the abutment portion 9 of the male end portion 3 forming therewith the sealing portion 10.

## Claims

1. Plastics pipe joint, in particular polyolefin plastic pipe joint, comprising a first tubular element (1) provided with a first male end (3) having an external wall (13) provided with an external thread (4) and a second tubular element (2) provided with a second female end (5) having an inner wall (15) provided with an internal thread (6) and an internal shoulder (7), said first male end (3) being screwable into said second female end (5) along a longitudinal axis (X) in an assembled configuration (A) for joining said first tubular element (1) and said second tubular element (2) so as to form said joint (100), said inner wall (15) of said second female end (5) being provided with at least one flexible and/or deformable sealing portion (8) which is interposed between said internal shoulder (7) and said internal thread (6), said external wall (13) of said first male end (3) comprising an abutment portion (9) that is interposed between a front edge (11) of said first male end (3) and said external thread (4), **characterized in that** said sealing portion (8) is integrally formed with said second tubular element (2) and in said assembled configuration (A) is bent by, and abuts, said abutment portion (9) so as to carry out with the latter a sealing portion (10) for the wet seal of said joint (100).

2. Joint according to claim 1, wherein said sealing portion (8) is made by chip machining or by thermoforming process of said internal wall (15).

3. Joint according to claim 1 or 2, wherein said sealing portion (8) comprises a sealing lip having an annular shape extending inside said second female end (5), in particular substantially radially towards said longitudinal axis (X).

4. Joint according to claim 3, wherein said annular sealing lip (8) is tooth or hook shaped in a section according to a plane passing through said longitudinal axis (X).

5. Joint according to any preceding claim, wherein said second female end (5) comprises a plurality of sealing portions (8) mutually spaced apart and interposed between said internal shoulder (7) and said internal thread (6).

6. Joint according to any preceding claim, wherein said external wall (13) of said first male end (3) and said inner wall (15) of said second female end (5) have complementary tapered shapes, in particular truncated cone shapes.

7. Joint according to claim 6, wherein said external thread (4) and said internal thread (6) are conical threads.

8. Joint according to any preceding claim, wherein said external thread (4) and said internal thread (6) comprise a plurality of thread starts.

9. Joint according to any preceding claim, wherein said external thread (4) and said internal thread (6) are metric threads or Gas threads.

## Patentansprüche

1. Kunststoffrohrverbindung, insbesondere Polyolefin-Kunststoff-Rohrverbindung mit einem ersten röhrenförmigen Element (1), das mit einem ersten Steckerende (3) mit einer Außenwand (13) versehen ist, die mit einem Außengewinde (4) versehen ist, und einem zweiten röhrenförmigen Element (2), das mit einem zweiten Buchsenende (5) mit einer Innenwand (15) versehen ist, die mit einem Innengewinde (6) und einem internen Absatz (7) versehen ist, wobei das erste Steckerende (3) in das zweite Buchsenende (5) entlang einer Längsachse (X) in einer zusammengefügten Konfiguration (A) zum Verbinden des ersten röhrenförmigen Elements (1) und des zweiten röhrenförmigen Elements (2) schraubbar ist, um die Verbindung (100) zu bilden, wobei die Innenwand (15) des zweiten Buchsenendes (5) mit mindestens einem flexiblen und/oder verformbaren Dichtungsabschnitt (8) versehen ist, der zwischen den internen Absatz (7) und das Innengewinde (6) eingefügt ist, wobei die Außenwand (13) des ersten Steckerendes (3) einen Anlageabschnitt (9) umfasst, der zwischen eine vordere Kante (11) des ersten Steckerendes (3) und das Außengewinde (4) eingefügt ist, **dadurch gekennzeichnet, dass** der Dichtungsabschnitt (8) einteilig mit dem zweiten röhrenförmigen Element (2) ausgebildet ist und in der zusammengefügten Konfiguration (A) durch den Anlageabschnitt (9) gebogen ist und daran anliegt, um mit dem letzteren einen Dichtungsabschnitt (10) für die Nassdichtung der Verbindung (100) auszuführen.

2. Verbindung nach Anspruch 1, wobei der Dichtungsabschnitt (8) durch einen Spanbearbeitungs- oder einen Thermoformprozess der Innenwand (15) hergestellt wird.

3. Verbindung nach Anspruch 1 oder 2, wobei der Dichtungsabschnitt (8) eine Dichtungslippe mit einer ringförmigen Gestalt umfasst, die sich innerhalb des zweiten Buchsenendes (5), insbesondere im Wesentlichen radial zur Längsachse (X) hin, erstreckt.

4. Verbindung nach Anspruch 3, wobei die ringförmige Dichtungslippe (8) in einem Schnitt gemäß einer Ebene, die durch die Längsachse (X) verläuft, zahn- oder hakenförmig ist.

5. Verbindung nach einem vorangehenden Anspruch, wobei das zweite Buchsenende (5) eine Vielzahl von Dichtungsabschnitten (8) umfasst, die voneinander beabstandet sind und zwischen den internen Absatz (7) und das Innengewinde (6) eingefügt sind.

6. Verbindung nach einem vorangehenden Anspruch, wobei die Außenwand (13) des ersten Steckerendes (3) und die Innenwand (15) des zweiten Buchsenendes (5) komplementäre verjüngte Formen, insbesondere Kegelstumpfformen, aufweisen.

7. Verbindung nach Anspruch 6, wobei das Außengewinde (4) und das Innengewinde (6) konische Gewinde sind.

8. Verbindung nach einem vorangehenden Anspruch, wobei das Außengewinde (4) und das Innengewinde (6) eine Vielzahl von Gewindeanfängen umfassen.

9. Verbindung nach einem vorangehenden Anspruch, wobei das Außengewinde (4) und das Innengewinde (6) metrische Gewinde oder Gasgewinde sind.

## Revendications

1. Joint de tuyau en plastique, en particulier joint de tuyau en plastique de polyoléfine, comprenant un premier élément tubulaire (1) pourvu d'une première extrémité mâle (3) ayant une paroi externe (13) pourvue d'un filetage externe (4) et un second élément tubulaire (2) pourvu d'une seconde extrémité femelle (5) ayant une paroi intérieure (15) pourvue d'un filetage interne (6) et d'un épaulement interne (7), ladite première extrémité mâle (3) pouvant être vissée dans ladite seconde extrémité femelle (5) le long d'un axe longitudinal (X) dans une configuration assemblée (A) pour joindre ledit premier élément tubulaire (1) et ledit second élément tubulaire (2) de manière à former ledit joint (100), ladite paroi intérieure (15) de ladite seconde extrémité femelle (5) étant pourvue d'au moins une portion d'étanchéité flexible et/ou déformable (8) qui est interposée entre ledit épaulement interne (7) et ledit filetage interne (6), ladite paroi externe (13) de ladite première extrémité mâle (3) comprenant une portion de butée (9) qui est interposée entre un bord avant (11) de ladite première extrémité mâle (3) et ledit filetage externe (4), **caractérisé en ce que** ladite portion d'étanchéité (8) est formée d'un seul tenant avec ledit second élément tubulaire (2) et dans ladite configuration assemblée (A) est pliée par ladite portion de butée (9) et vient en butée contre celle-ci de manière à réaliser avec cette dernière une portion d'étanchéité (10) pour le joint d'étanchéité humide dudit joint (100).

2. Joint selon la revendication 1, dans lequel ladite portion d'étanchéité (8) est fabriquée par usinage par enlèvement de copeaux ou par processus de thermoformage de ladite paroi interne (15).

3. Joint selon la revendication 1 ou 2, dans lequel ladite portion d'étanchéité (8) comprend une lèvre d'étanchéité ayant une forme annulaire s'étendant à l'intérieur de ladite seconde extrémité femelle (5), en particulier de manière sensiblement radiale vers ledit axe longitudinal (X).

4. Joint selon la revendication 3, dans lequel ladite lèvre d'étanchéité annulaire (8) est en forme de dent ou de crochet dans une section selon un plan traversant ledit axe longitudinal (X).

5. Joint selon une quelconque revendication précédente, dans lequel ladite seconde extrémité femelle (5) comprend une pluralité de portions d'étanchéité (8) mutuellement espacées et interposées entre ledit épaulement interne (7) et ledit filetage interne (6).

6. Joint selon une quelconque revendication précédente, dans lequel ladite paroi externe (13) de ladite première extrémité mâle (3) et ladite paroi intérieure (15) de ladite seconde extrémité femelle (5) ont des formes resserrées complémentaires, en particulier des formes tronconiques.

7. Joint selon la revendication 6, dans lequel ledit filetage externe (4) et ledit filetage interne (6) sont des filetages coniques.

8. Joint selon une quelconque revendication précédente, dans lequel ledit filetage externe (4) et ledit filetage interne (6) comprennent une pluralité de débuts de filetage.

9. Joint selon une quelconque revendication précédente, dans lequel ledit filetage externe (4) et ledit filetage interne (6) sont des filetages métriques ou des filetages pour gaz.
